# EUROPEAN PATENT APPLICATION

(11) **EP 2 180 393 A2**
(43) Date of publication of application: **28.04.2010**
(21) Application number: 09166543.0
(22) Date of filing: 28.07.2009
(51) Int. Cl.: G06F 1/16

(54) **Laptop computer case**

(30) Priority: 27.10.2008 US 259167
(71) Applicant: 1747108 Ontario Inc., Brampton, ON L6S 6KB (CA)
(72) Inventor: De Filippis, Pasquale, Brampton Ontario L6S 1T3 (CA); Ruso, Rocco, Brampton Ontario L6P 1V5 (CA)
(74) Representative: Fiorani, Giuseppe

(57) **Abstract**

A mobile workstation is provided. The mobile workstation provides dual functions of transporting a mobile computer, such as a laptop, and providing a functional workspace. The bottom surface of the workstation includes two indented portions. This bottom surface is intended for placement on a user's legs and to allow for a more comfortable use of a laptop in that position. One or more extensions can be provided, such as a surface for using a computer mouse. The lid of the workstation can include rigid and non-rigid portions, which can be folded to compact the lid when the workstation is open and used as a workstation. A power supply compartment provides separate storage of a power supply from the laptop while allowing connection between the laptop and the power supply to permit use while in the laptop compartment.

## Description

### FIELD OF THE INVENTION

The present invention relates generally to carrying cases. More particularly, the present invention relates to a carrying case for a portable, or laptop, computer.

### BACKGROUND OF THE INVENTION

A portable computer, also known as a laptop computer, or laptop, provides a user with a convenient and transportable workstation. The laptop can be transported within a home or place of work, or be brought with a user on travel. The user does not have to worry about availability of a computer at an unfamiliar location, since they can take their own computer and files with them.

A carrying case for a laptop typically includes some padding or other protection to keep the computer safe from potential damage during transport. Many laptop carrying cases are simply modifications of existing carrying cases, such as briefcases or backpacks, with additional padding to protect the computer.

Other products address the use of laptop computers. For example, the LapDesk™ product provides a foam filled base that provides stability and comfort for the user while using a laptop computer. It is not designed for transporting the laptop.

U.S. Patent No. 5,871,094 issued to Leibowitz on February 16, 1999 provides a laptop computer case and stand. A lid is hinged to the base. A leg engaging facility is provided along the rear edge of a rear portion of the lid of the case, to fit upon the upper surface of a pair of legs of a person using the laptop computer. However, both the leg engaging facility and the base engage the user's legs, creating pressure points for the weight of the laptop and case on the user's legs. Moreover, while the leg engaging facility is contoured, the base is not contoured, thereby creating areas of discomfort.

It is, therefore, desirable to provide a laptop computer case that can be used to transport and use a laptop in a comfortable manner.

### SUMMARY OF THE INVENTION

It is an object of the present invention to obviate or mitigate at least one disadvantage of previous laptop computer cases.

In a first aspect, the present invention provides a mobile workstation, such as a laptop computer workstation case. The mobile workstation includes a base defining two contoured indented surfaces extending along the entire length of the base arranged to engage ergonomically with legs of a user. The mobile workstation includes an outer frame comprising side walls, a top wall and a bottom wall. A lid is hinged to the base. The lid includes a plurality of substantially rigid sections and a plurality of non-rigid sections separating the plurality of substantially rigid sections. The plurality of rigid sections are arranged to be compactly folded upon one another to permit use of a laptop computer while in the laptop compartment. A retractable working surface tray engages with and extends from a first side of the base. The base, the outer frame, and the lid define a laptop compartment.

The mobile workstation can further include a power supply compartment, provided adjacent the laptop compartment, arranged to provide separate storage of a power supply from the laptop. A power supply passage can permit a computer end of a power cord to be connected to the laptop to permit use while in the laptop compartment. The power supply compartment can further define a second power supply passage arranged to permit access to the power supply without opening the laptop compartment.

A pair of protective feet can be provided at a bottom end of the mobile workstation, for additional exterior protection. The mobile workstation can further include a shoulder strap. The mobile workstation can include a shoulder strap retainer to receive the shoulder strap when in a non-operational position. The shoulder strap retainer can be provided between the pair of protective feet.

The mobile workstation can further include a removable file sleeve arranged to be removably mated with the lid to provide additional storage. A retractable handle can be disposed at a top of the case and integrate with the base when in an unretracted position.

The plurality of non-rigid sections can be arranged to provide hinging movement when one or more of the plurality of rigid sections are compactly folded upon one another. A second retractable tray can engage with and extend from a second side of the base opposite the first side

The mobile workstation can further include a lid gel foam and a base gel foam provided within the lid and the base, respectively, for securing a laptop computer within the laptop compartment. A base foam support and storage unit can be provided in the base. A storage portion of the storage unit can be housed between the first and second retractable trays when the trays are in a closed position.

In another aspect, the present invention provides a laptop computer case and workstation including a base defining two contoured indented surfaces extending along the entire length of the base for engaging with legs of a user. A lid is hinged to the base. A first retractable tray engages with and extends from a first side of the base. A second retractable tray engages with and extends from a second side of the base, opposite the first side.

The case can further include a lid gel foam and a base gel foam provided within the lid and the base, respectively, for securing a laptop computer within the case. The case can further include a base foam support and storage unit provided in the base. A storage portion of the storage unit is housed between the first and second retractable trays when the trays are in a closed position.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:

Figures **1A, 1B** and **1C** are bottom, front and in-use views of a mobile workstation according to an embodiment of the present invention.

Figures **2A** and **2B** illustrate a mobile workstation according to an embodiment of the present invention with a working surface in a retracted and operational position, respectively.

Figures **3A, 3B** and **3C** illustrate a mobile workstation according to an embodiment of the present invention showing a plurality of rigid and non-rigid portions in a lid thereof, in various states of retraction.

Figures **4A, 4B** and **4C** illustrate a mobile workstation according to another embodiment of the present invention two rigid and non-rigid portions in a lid thereof, in various states of retraction and positioning.

Figures **5A, 5B****,** **5C, 5D** and **5E** illustrate right front perspective, front open, left front perspective with retracted strap, top and side views of an embodiment of the present invention.

Figures **6A, 6B****,** **6C, 6D** and **6E** illustrate front left and right perspective, rear with retracted handle, top and side views of another embodiment of the present invention.

Figures **7A, 7B****,** **7C, 7D** and **7E** illustrate front perspective, front open, side opening positions, top and side views of an embodiment of the present invention.

Figures **8A, 8B, 8C, 8D** and **8E** illustrate front perspective, top, rear with retracted handle, end and side views of another embodiment of the present invention.

Figure **9A** illustrates a top perspective view of a mobile workstation according to an embodiment of the present invention, with Figure **9B** being an enlarged detail view of a zipper point.

Figure **10A** illustrates a side cross-section view of a mobile workstation according to an embodiment of the present invention showing a laptop compartment and a power supply compartment, with Figure **10B** being an enlarged detail view of the joint between the two compartments.

Figure **11A** illustrates a front view of a mobile workstation according to an embodiment of the present invention.

Figures **11B** and **11C** illustrate side and top views of the embodiment of Figure **11A****.**

Figures **11D, 11E, 11F** and **11G** illustrate bottom perspective, front, side, and bottom views of an embodiment of the present invention showing two different materials.

Figures **11E, 11F** and **11G** illustrate front, side, and bottom views of an embodiment of the present invention showing two different materials.

Figure **12** illustrates an exploded view of an assembly of an exemplary mobile workstation according to an embodiment of the present invention.

Figures **13A** and **13B** illustrate front perspective and front views of an embodiment of the present invention in a closed position.

Figures **13C** and **13D** illustrate rear and front views of an embodiment of the present invention with the lid in an open position and a working surface in a retracted position.

Figure **13E** illustrates a side view of an embodiment of the present invention focusing on a zipper area.

Figure **14** is a perspective view of a mobile workstation, such as a laptop computer case, according to an embodiment of the present invention in a closed position.

Figure **15** is a top view of the mobile workstation of Figure **14****.**

Figure **16** is a front view of the mobile workstation of Figure **14****.**

Figure **17** is a side view of the mobile workstation of Figure **14****.**

Figure **18** is a perspective view of a mobile workstation according to an embodiment of the present invention in an open position, with a laptop housed therein.

Figure **19** is a perspective view of a mobile workstation according to an embodiment of the present invention in an open position, with no laptop.

Figure **20** is a bottom perspective view of a mobile workstation according to an embodiment of the present invention in an open position, with a laptop housed therein.

Figure **21** is an exploded view of elements of a mobile workstation according to an embodiment of the present invention.

Figure **22** is a top view of a mobile workstation base according to an embodiment of the present invention with portions in section.

Figure **23** is a top view of a mobile workstation according to an embodiment of the present invention.

Figure **24** is a cross-sectional view of the mobile workstation of Figure **23** taken along line A-A.

### DETAILED DESCRIPTION

Generally, the present invention provides a mobile workstation for carrying a portable computer, such as a laptop. The mobile workstation, or laptop workstation case, provides dual functions of transporting a mobile computer, such as a laptop, and providing a functional workspace. The bottom surface of the workstation includes two indented portions. This bottom surface is intended for placement on a user's legs and to allow for a more comfortable use of a laptop in that position. One or more extensions can be provided, such as a surface for using a computer mouse. The lid of the workstation can include rigid and non-rigid portions, which can be folded to compact the lid when the workstation is open and used as a workstation. A power supply compartment provides separate storage of a power supply from the laptop while allowing connection between the laptop and the power supply to permit use while in the laptop compartment.

While some existing approaches provide a combined laptop carrying case and stand, they do not provide contoured surface that extends along the entire length of the bottom of the case itself.

While embodiments of the present invention provide a mobile workstation, the terms "mobile workstation", "laptop workstation case" and "laptop case" are used herein interchangeably to refer to a mobile workstation that provides both the ability to transport a mobile computer and use as a work surface, or work station. Embodiments of the present invention provide a laptop case that protects the laptop during transport and provides features that enhance the experience of using the laptop while it is actually in a user's lap. Embodiments of the present invention allow for easy access and set-up of the laptop without removing it from the case. The case can provide a comfortable and ergonomic laptop work area for use on the lap.

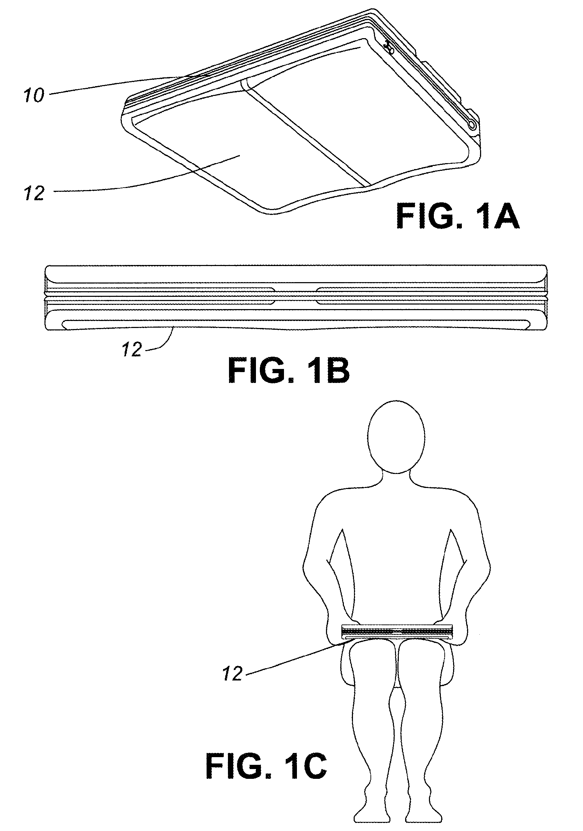

Figures **1A, 1B and 1C** are bottom, front and in-use views of a laptop case and workstation according to an embodiment of the present invention. A case according to an embodiment of the present invention can be referred to as a laptop computer workstation case **10,** as it combines the functions of a laptop case and a laptop workstation. As shown in Figure **1A****,** the case **10** includes a base **12** defining two contoured indented surfaces extending along the entire length of the base arranged to engage ergonomically with legs of a user. The base, an outer frame, and a lid of the case can define a laptop compartment. The outer frame can include side walls, a top wall and a bottom wall. The view of Figure **1B** shows some of the curvature of the base, providing ergonomic engagement with legs of the user, providing an even distribution of pressure, thus avoiding concentrated pressure points. Figure **1C** shows the case in use on a user's lap. In another embodiment, the base **12** defines a plurality of contoured indented surfaces each extending along the entire length of the base arranged to engage ergonomically with legs of a user.

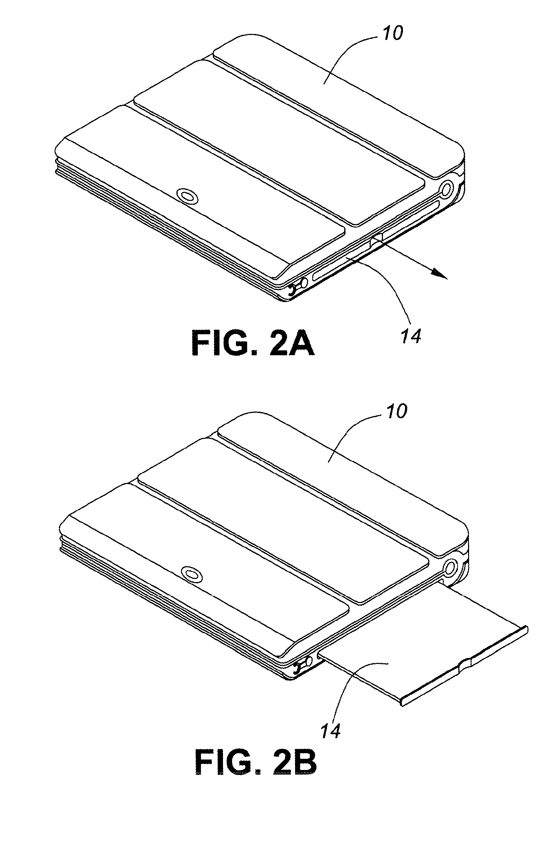

Figures **2A** and **2B** illustrate a laptop workstation case according to an embodiment of the present invention with a working surface in a retracted and operational position, respectively. These figures show a retractable working surface tray **14** engaging with and extending from a first side of the base. The tray **14** is shown in Figure **2A** in a retracted position and in Figure **2B** in an operational position. The retractable working surface tray **14** can be a mousing surface, such as for use with a computer mouse, or can be used as a working surface for jotting notes or performing calculations. Also shown in Figures **2A** and **2B****,** the lid can include a plurality of rigid sections and a plurality of non-rigid sections. A rigid section can also be provided to cover the power supply compartment.

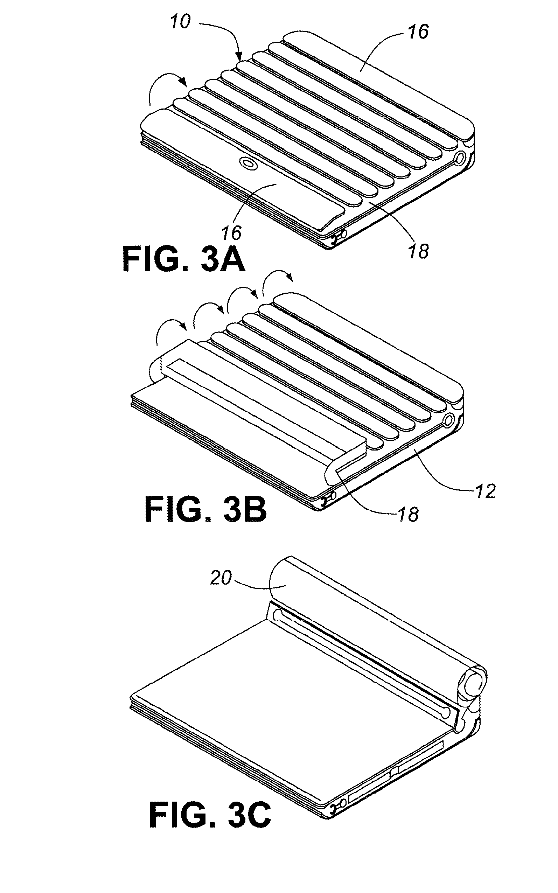

Figures **3A, 3B** and **3C** illustrate a laptop workstation case according to an embodiment of the present invention showing a plurality of rigid and non-rigid portions in a lid thereof, in various states of retraction. The lid **10** is hinged to the base, and can a plurality of substantially rigid sections **16.** The rigid sections **16** can provide protection and sturdiness to the case. A plurality of non-rigid sections **18** separate the plurality of substantially rigid sections **16.** The plurality of rigid sections **16** are arranged to be compactly folded upon one another to permit use of the laptop computer while in the case. The folded up, or rolled up, rigid portions of the case can provide a stopping surface to prevent the top (or screen portion) of the laptop from being extended beyond a certain angle.

Figure **3B** shows how a non-rigid portion **18** of the lid can be made of a material suitable to be used to function as a hinge. Arrows in Figures **3A** and **3B** show the direction in which rigid and non-rigid portions of the lid can be rolled or flipped, to compact the lid to a compacted or open position. Figure **3C** shows a fully opened laptop bag with the lid in a fully open position **20,** also referred to as a fully compacted position.

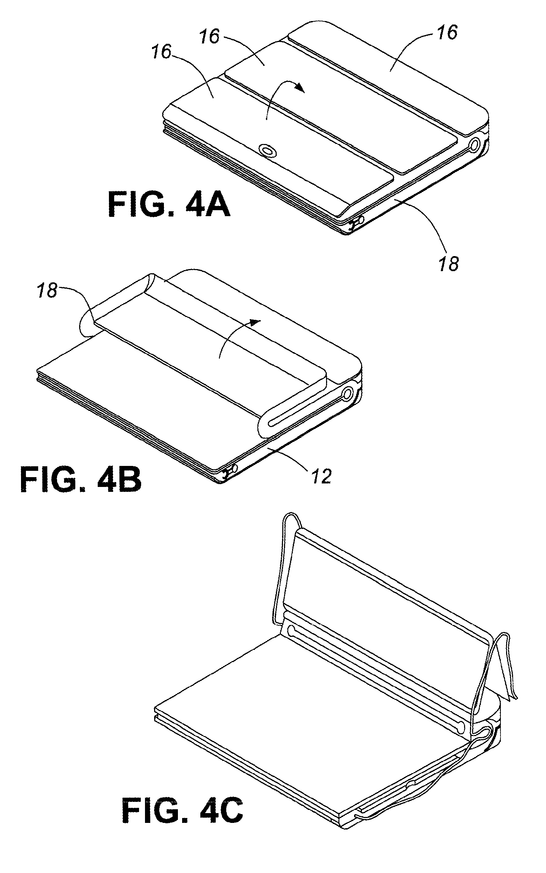

Figures **4A, 4B** and **4C** illustrate a laptop workstation case according to another embodiment of the present invention two rigid and non-rigid portions in a lid thereof, in various states of retraction and positioning. This embodiment is similar to the embodiment shown in Figures **3A-3C****,** and show that the rigid sections of the lid can be folded on to one another, rather than simply rolled into one another. The folded rigid sections can co-operate to provide a stand surface in a fully open position. The stand surface can be useful to prop up papers, or be used as a support for a book or magazine. While Figures **4A-4C** show an inner surface of the lid exposed when the rigid sections are folded upon one another, in another embodiment an outer surface of the lid is exposed when the rigid sections of the lid compactly folded upon one another.

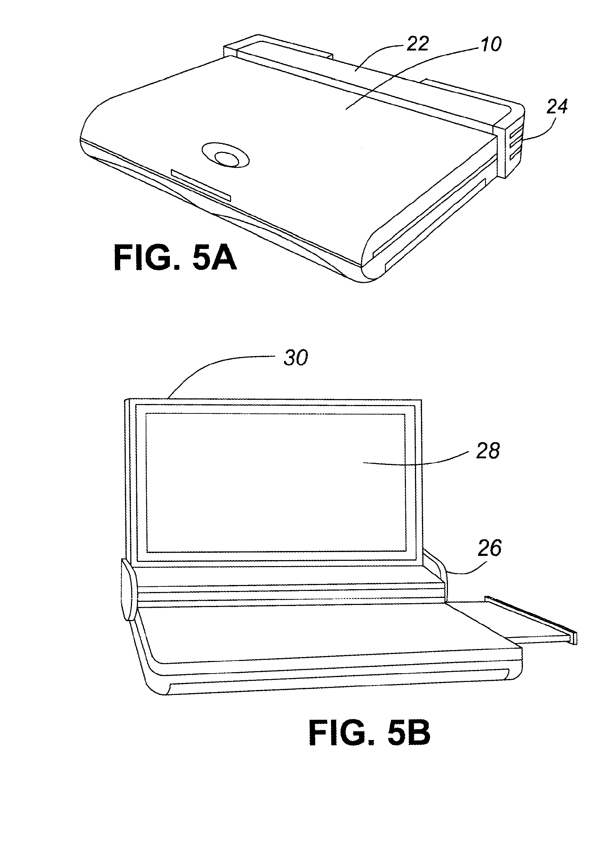

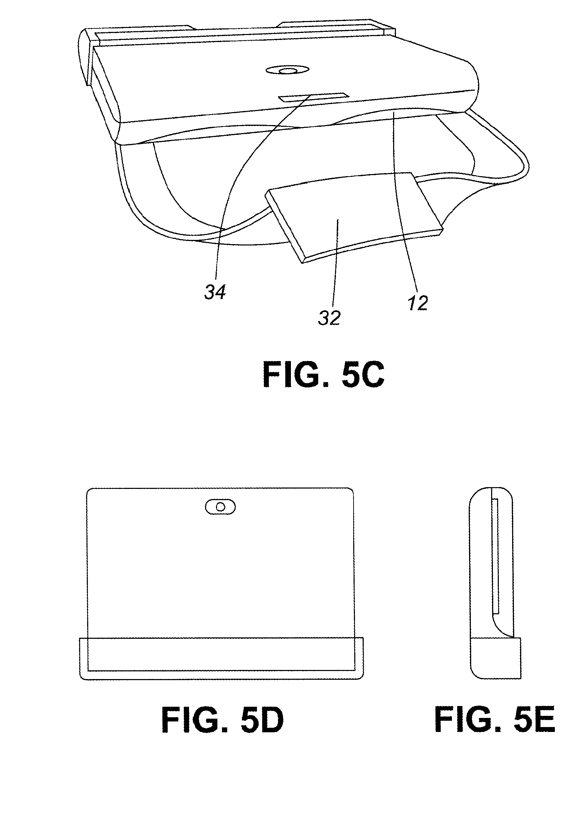

Figures **5A, 5B****,** **5C, 5D** and **5E** illustrate right front perspective, front open, left front perspective with retracted strap, top and side views of an embodiment of the present invention. In this embodiment, the case is a full hard shell with a hinged lid **10** that is a rigid lid. The lid **10** defines the top of a laptop compartment. A power supply compartment **22** is provided below the laptop compartment, and permits separate storage of the power supply. An additional exterior protective portion **24** can provide additional protection to a surface that is likely to be engaged with a floor or with the ground. The exterior protective portion **24** can be provided as a pair of rubberized feet.

As shown in Figure **5B****,** a compartment separator **26** is arranged to provide access between the compartments, such as to permit a power cable to be connected to the laptop when in the case, and to permit access to the power supply without opening the laptop compartment. A finned top foam liner **28,** such as shown provided in the upper and lower portions of the laptop compartment, can dissipate heat and secure the laptop in a closed position. A lid opening **30** provides a strong and accurate feeling and provides a greater visual mass.

As shown in Figure **5C****,** a shoulder strap **32,** such as a rubberized shoulder strap, can be provided for comfort. An integrated latch **34** can provide a secure closing connection of the lid with the base, to close the laptop compartment. The ergonomic curvature of the base **12** is slightly visible from the front view, providing a visual cue to its ergonomic use as a workstation on a user's lap.

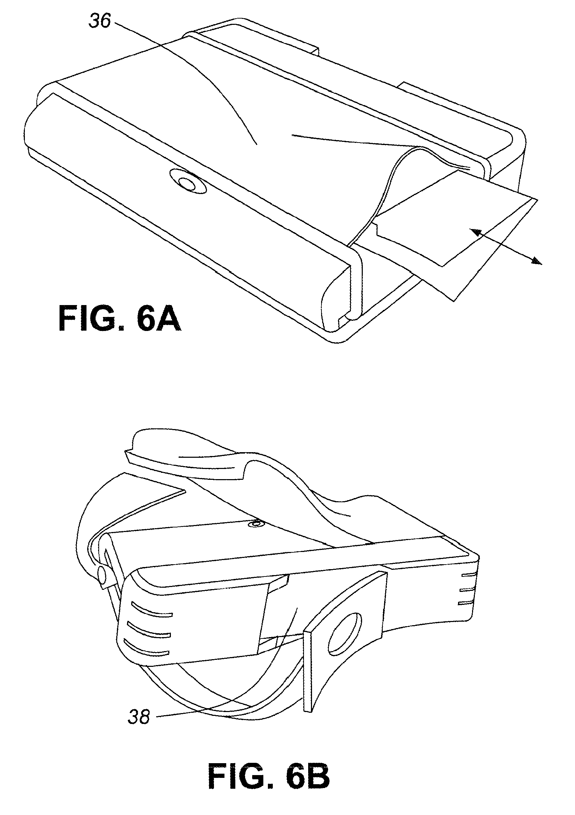

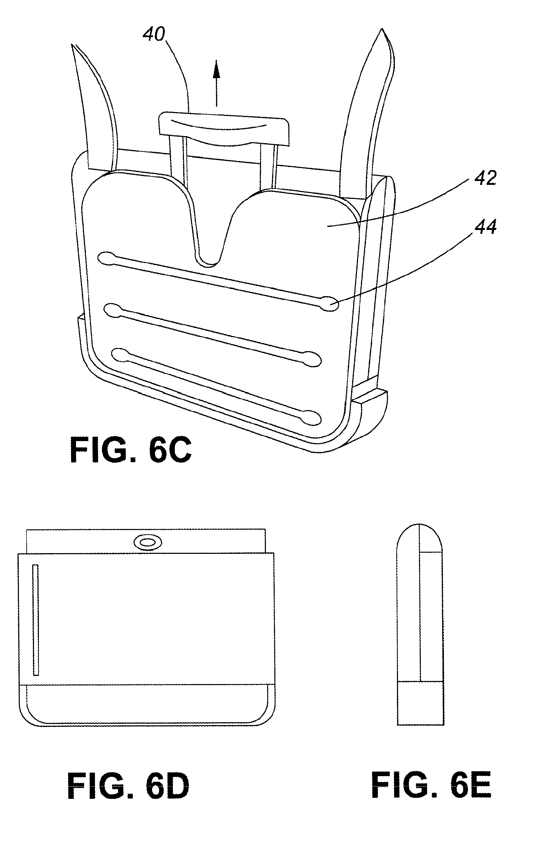

Figures **6A,** 6B, **6C, 6D** and **6E** illustrate front left and right perspective, rear with retracted handle, top and side views of another embodiment of the present invention. In Figure **6A****,** a file sleeve **36,** such as a neoprene file sleeve, is shown as being removable attachable to the lid. For example, the sleeve can simply hook onto the lid and integrate into the design of the case.

Figure **6B** shows that a shoulder strap can mate with a shoulder strap retainer **38** to receive the shoulder strap when in a non-operational position. In the embodiment of Figure **6B****,** the case comprises a shoulder strap retainer provided between the pair of protective feet, to receive the shoulder strap when in a non-operational position.

Figure **6C** illustrates a retractable handle **40** disposed at a top of the case and integrating with the base when in an unretracted position. A padded bottom surface **42** of the base **12** is preferably made with a material that is comfortable and grips the user's lap. The base **12** can also be provided as a louvered base **44** that allows breathability for the user's lap.

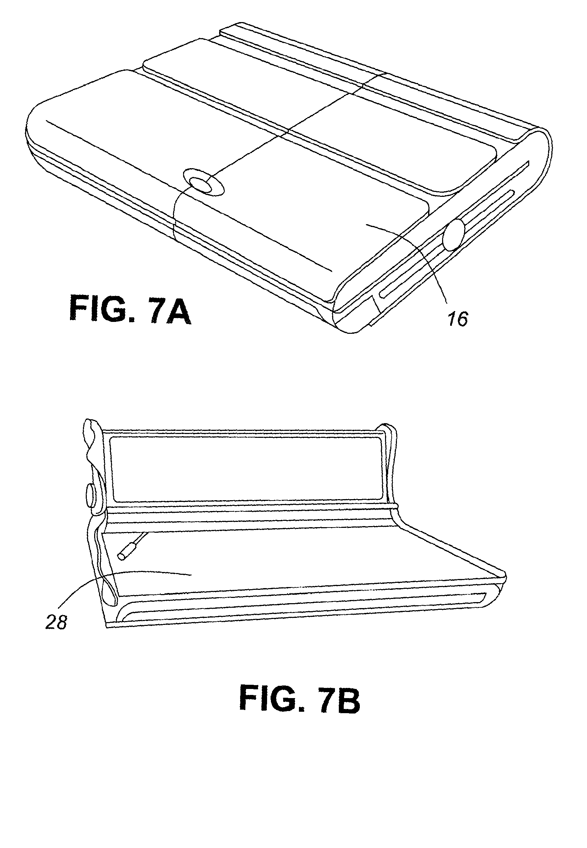

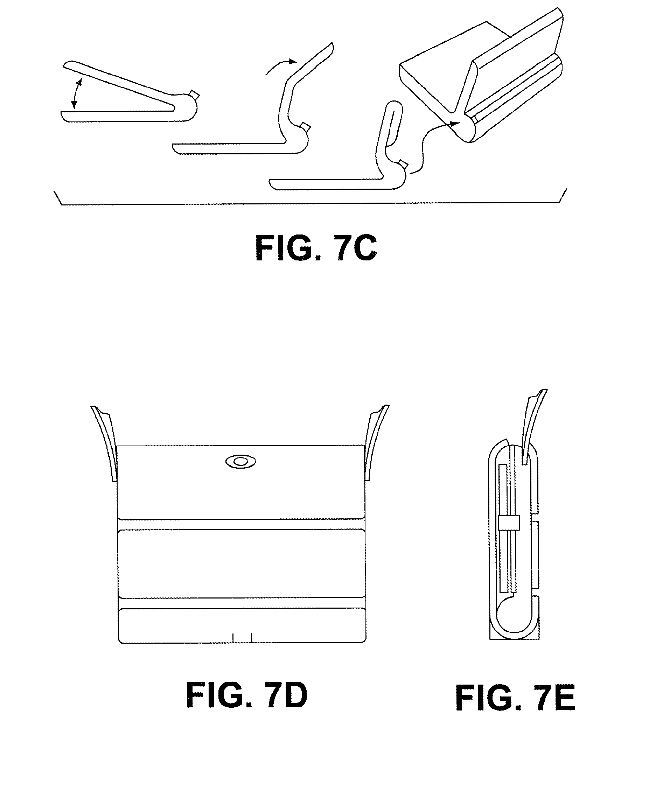

Figures **7A, 7B****,** **7C, 7D** and **7E** illustrate front perspective, front open, side opening positions, top and side views of an embodiment of the present invention. Figure **7A** is another illustration showing that the lid can include a plurality of rigid portions **16.** The non-rigid portions can be provided of a fabric material, which allows greater possibility for inner volume, in addition to the folding of the rigid lid sections.

Figure **7B** illustrates a finned foam lower liner **42,** similar to the liner described in relation to Figure **5B****,** provided in the laptop compartment and arranged to dissipate heat. Different sizes and shapes of the liner **42,** in either or both of the top and/or bottom of the laptop compartment, can allow for a greater range of laptop sizes to be housed in the case. Figure **7C** illustrates the case with a double-hinged lid in various states of opening, and shows that the lid crates a smaller visual mass when the lid is open.

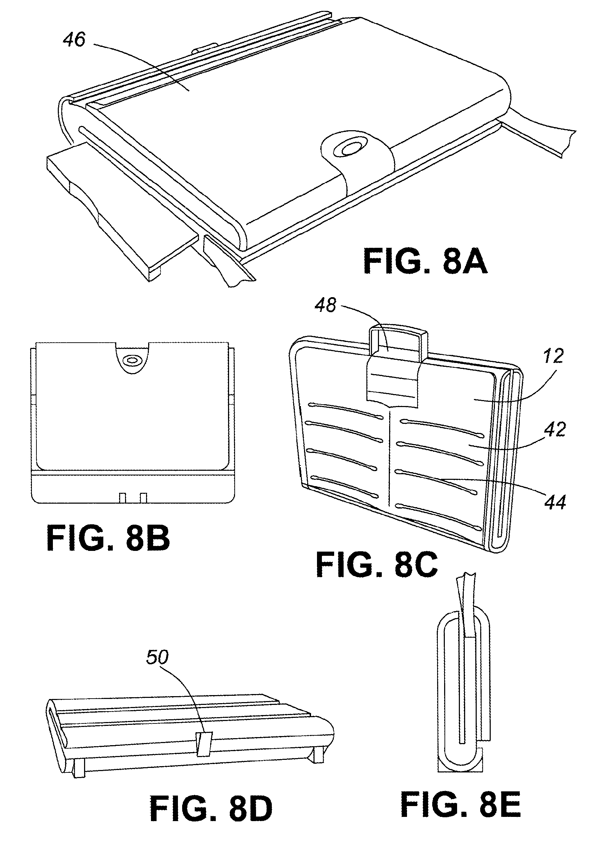

Figures **8A, 8B, 8C, 8D** and **8E** illustrate front perspective, top, rear with retracted handle, end and side views of another embodiment of the present invention. In Figure **8A****,** a removable file sleeve **46** is illustrated. This file sleeve is similar to the file sleeve **36** of Figure **6A****,** but shows that the shape and coverage of the sleeve with respect to the size of the lid can be varied. Similarly, a retractable handle **48** is shown in Figure **8C****,** which also integrated into the case when not in use, but with a slightly different design than the retractable handle **40** shown in Figure **6C****.** The base **12** can be lightly curved, such as resulting in a height at the peak of the curve of about 1/8", to allow ergonomic lap use with minimal volume or size increase. The padded bottom surface **42** and louvered base **44** are similar to Figure **6C****.**

A shoulder strap retainer **50** in Figure **8D** is shown with a different design and manner in which to engage and retain the shoulder strap, as compared to the shoulder strap retainer **38** in Figure **6B****.**

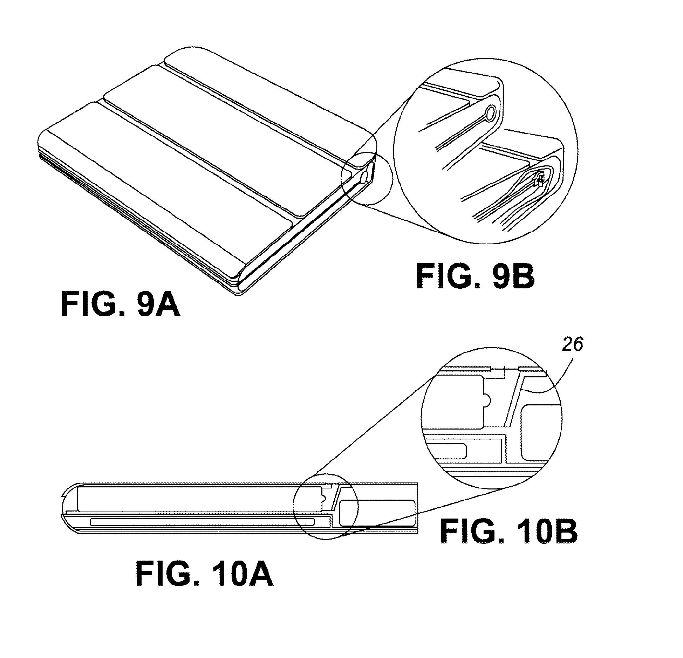

Figure **9A** illustrates a top perspective view of a laptop workstation case according to an embodiment of the present invention. This figure shows some detailing in an exemplary embodiment. In particular, Figure **9B** is an enlarged detail view of a zipper point of the case. A dual layer fabric can be arranged to surround and conceal the zipper and create an intuitive touch point.

Figure **10A** illustrates a side cross-section view of a laptop workstation case according to an embodiment of the present invention showing a laptop compartment and a power supply compartment. Figure **10B** is an enlarged detail view of the joint between the two compartments. While the rubber power door (described earlier as a compartment separator **26)** is shown in a closed position, such a rubber separator can be used to provide wire access while separating the two compartments.

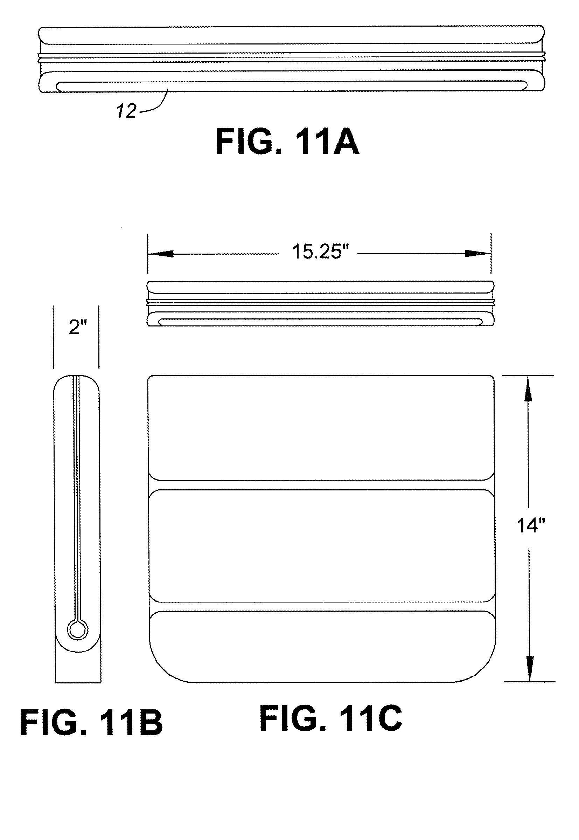

Figure **11A** illustrates a front view of a laptop workstation case according to an embodiment of the present invention. In the exemplary embodiment shown in Figure **11A**, the base **12** is a scalloped base, or bottom, that has a height of about 0.125". That height is measured at the peak of the curvature of the contoured indented surfaces extending along the entire length of the base, which are arranged to engage ergonomically with legs of a user.

Figures **11B** and **11C** illustrate side and top views of the embodiment of Figure **11A****.** These figures show a total height of the case as about 2", a total width of about 15.25", and a total depth of about 14".

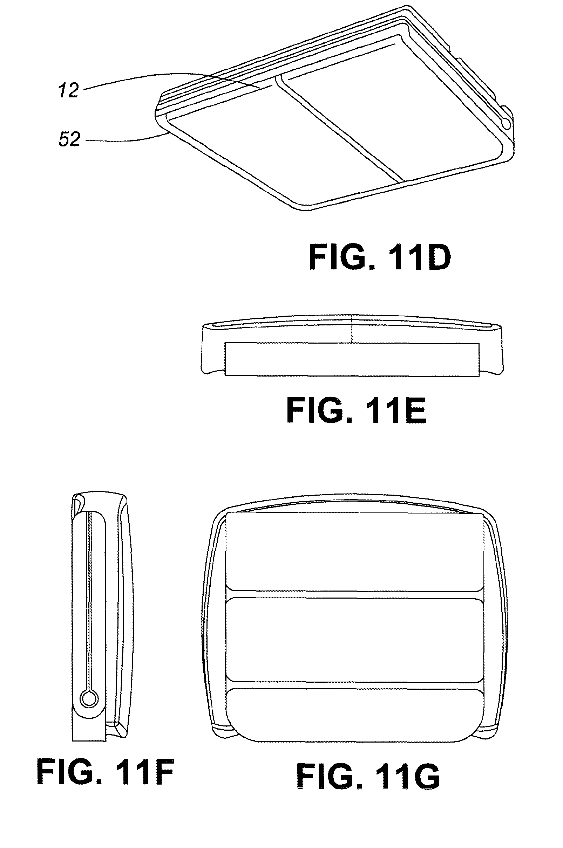

Figures **11D**, **11E, 11F** and **11G** illustrate bottom perspective, front, side, and bottom views of an embodiment of the present invention showing two different materials. In Figure **11D**, the base **12** is shown to curl slightly up at the front edge of the case. An upholstering material **52** can be provided on the base **12.** Figures **11E, 11F** and **11G** show other views with the upholstering material shown as a darker material than the rest of the case material.

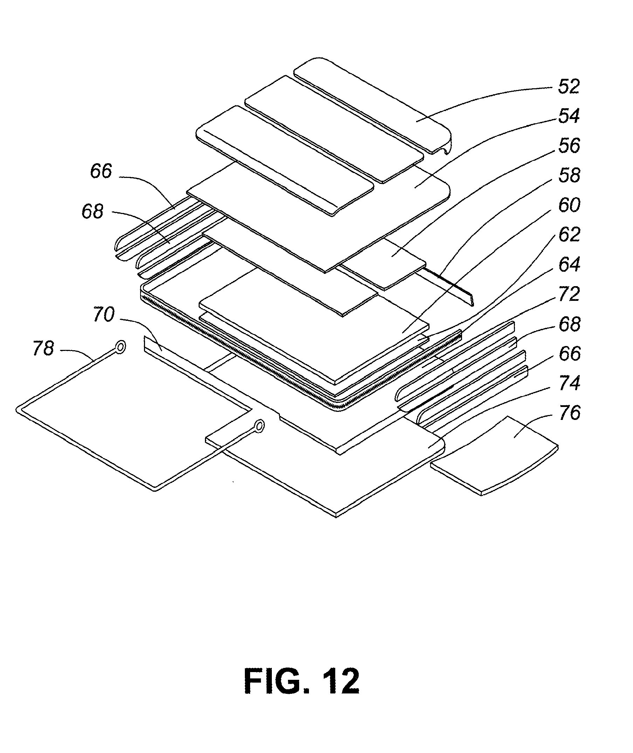

Figure **12** illustrates an exploded view of an assembly of an exemplary laptop workstation case according to an embodiment of the present invention. A number of elements that are shown as separate elements can be provided as constituent parts of other elements described herein. Shown in Figure **12** are elements including: an outer shell **52;** a top fabric **54;** a top foam **56;** a power door **58;** a lower foam **60;** a support tray **62;** a zipper **64;** an outer fabric **66;** an inner fabric **68;** a lower fabric **70;** a bottom shell **72;** a lap pad **74;** a mouse tray **76** and piping **78.**

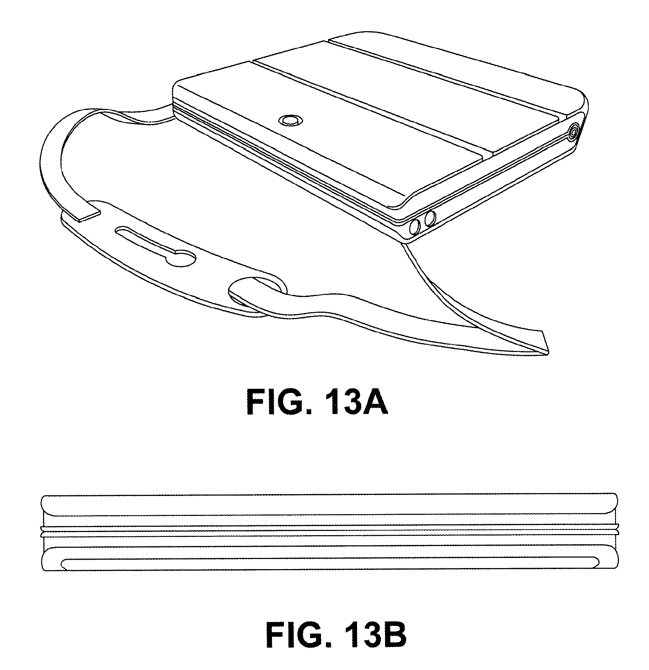

Figures **13A** and **13B** illustrate front perspective and front views of an embodiment of the present invention in a closed position. Figure **13A** illustrates an embodiment of a shoulder strap that has an engaging portion to engage with a shoulder strap retainer at the bottom of the case. Figure **13B** illustrates a front view of the case without the shoulder strap in use.

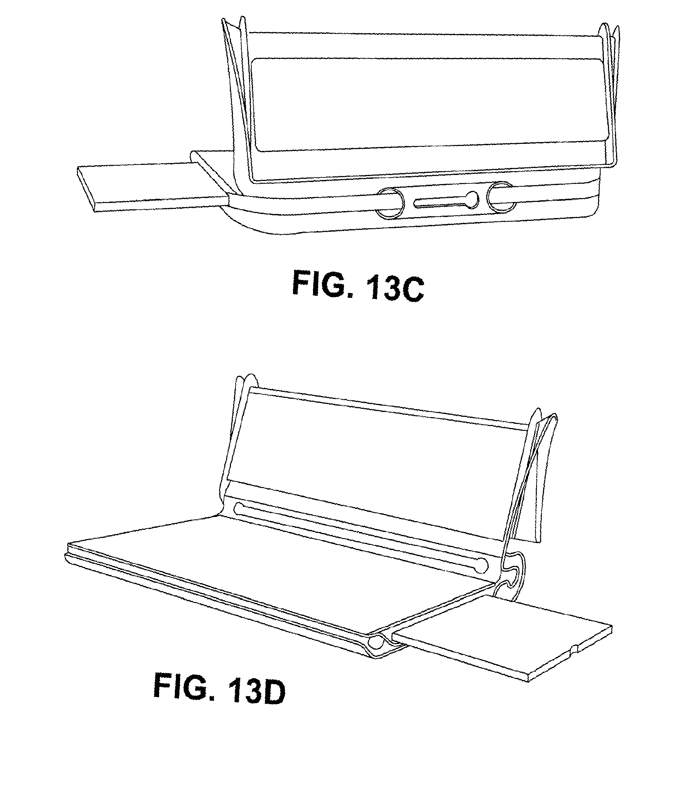

Figures **13C** and **13D** illustrate rear and front views of an embodiment of the present invention with the lid in an open position and a working surface in a retracted position. These figures show that when in an open position, the rigid portions of the lid can be provided with a lining material arranged to grip paper or other materials placed therein. The top edge of the lid can double as a retaining means to retain items in the "back" portion of the opened lid, while the front portion of the opened lid (which faces the user) can be used to store documents behind a laptop screen, or as a rest for the laptop screen.

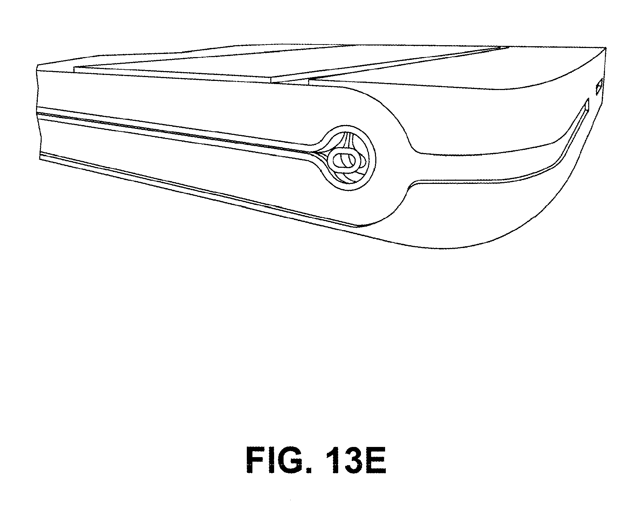

Figure **13E** illustrates a side view of an embodiment of the present invention focusing on a zipper area. Similar to the embodiment shown in Figure **9B****,** a zipper point area is shown, in which a dual layer fabric can be arranged to surround and conceal the zipper and create an intuitive touch point.

Therefore, in an aspect, the present invention provides a laptop computer workstation case. The case includes a base defining two contoured indented surfaces extending along the entire length of the base arranged to engage ergonomically with legs of a user. The case includes an outer frame comprising side walls, a top wall and a bottom wall. A lid is hinged to the base. The lid includes a plurality of substantially rigid sections and a plurality of non-rigid sections separating the plurality of substantially rigid sections. The plurality of rigid sections are arranged to be compactly folded upon one another to permit use of the laptop computer while in the case. A retractable working surface tray engages with and extends from a first side of the base. The base, the outer frame, and the lid define a laptop compartment.

The case can further include a power supply compartment, provided adjacent the laptop compartment, arranged to provide separate storage of a power supply from the laptop. A power supply passage can permit a computer end of a power cord to be connected to the laptop to permit use while in the case. The power supply compartment can further define a second power supply passage arranged to permit access to the power supply without opening the laptop compartment of the case.

A pair of protective feet can be provided at a bottom end of the case, for additional exterior protection. The case can further include a shoulder strap. The case can include a shoulder strap retainer to receive the shoulder strap when in a non-operational position. The shoulder strap retainer can be provided between the pair of protective feet.

The case can further include a removable file sleeve arranged to be removably mated with the lid to provide additional storage. A retractable handle can be disposed at a top of the case and integrate with the base when in an unretracted position.

The plurality of non-rigid sections can be arranged to provide hinging movement when one or more of the plurality of rigid sections are compactly folded upon one another. A second retractable tray can engage with and extend from a second side of the base opposite the first side

The case can further include a lid gel foam and a base gel foam provided within the lid and the base, respectively, for securing a laptop computer within the laptop compartment of the case. A base foam support and storage unit can be provided in the base. A storage portion of the storage unit can be housed between the first and second retractable trays when the trays are in a closed position.

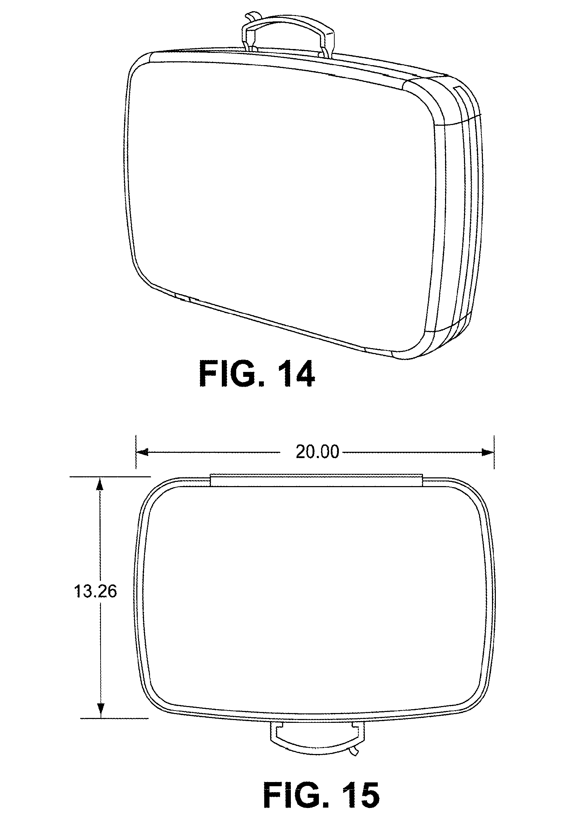

Figure **14** is a perspective view of a laptop computer case according to an embodiment of the present invention in a closed position. This view illustrates sleek lines of the case. The handle is shown as including a locking means, or securing means, to secure the laptop within the case.

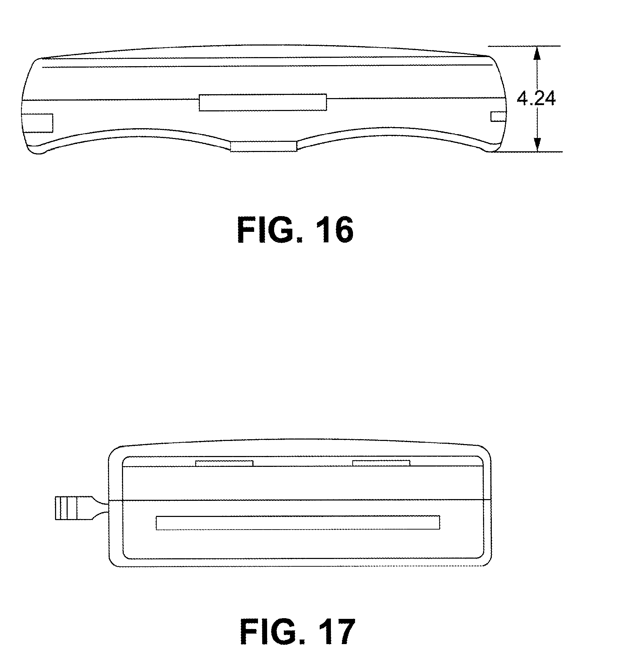

Figures **15****,** **16** and **17** are top, front and side views, respectively, of the laptop computer case of Figure **14.** Figures **15** and **16** show exemplary dimensions, in inches, for the case. Figure **16** also illustrates the base having two curved indentations that extend along the entire length of the bottom of the case. The dimensions and curvature of the indentations, or contoured surfaces, can be varied to suit adults and children having legs of different shapes and sizes.

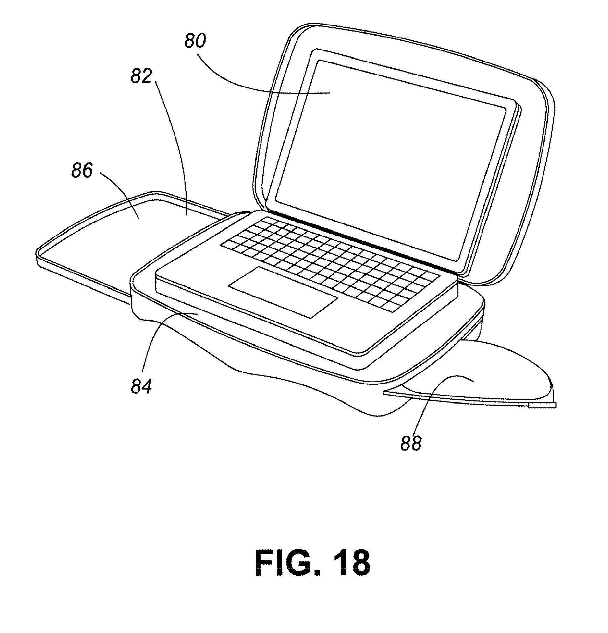

Figure **18** is a perspective view of a laptop computer case according to an embodiment of the present invention in an open position, with a laptop housed therein. The case can be described as having a lid hingedly attached to a base, and a retaining means. In Figure **18****,** the retaining means comprises upper and lower gel foam portions **80** and **82** provided in the lid and the base, respectively, to wrap around the laptop when closed. This retaining method allows for various sizes of laptops, while providing the same gel foam portions. Figure **18** shows the base **84** having curved indentations. The curved indentations can be provided as built-in leg contours._Figure **18** also shows a retractable tray **86** that extends from the left side of the base of the case, preferably in a pull-out manner. The retractable tray can be used as a storage tray to store a variety of documents or other items, and can also be used as a work surface. A retractable mouse pad **88** is also provided in the base of the case, on an opposite side from the retractable tray. The retractable mouse pad is advantageously used as a mouse pad, but can also be used as a further work surface, such as for using a calculator or jotting notes.

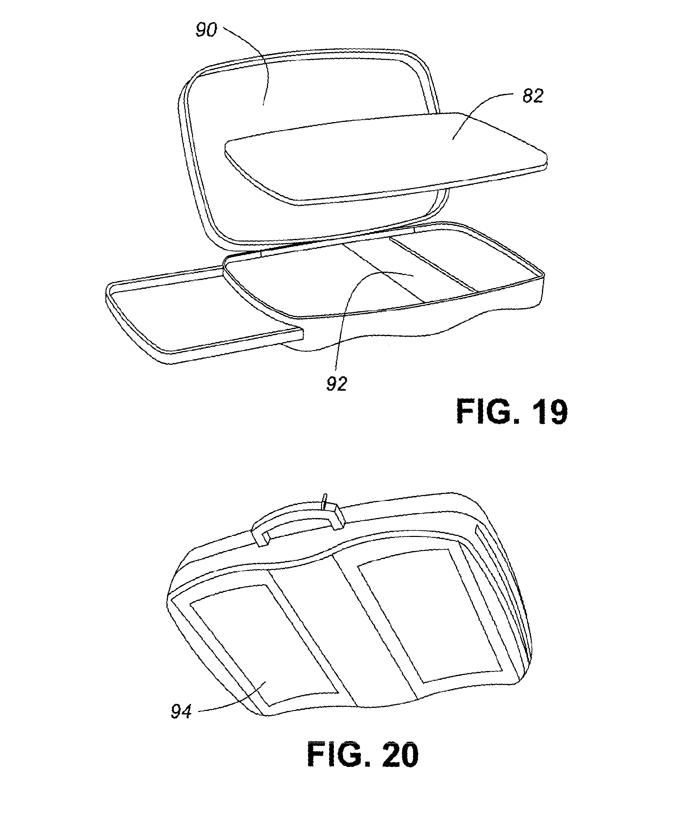

Figure **19** is a perspective view of a laptop computer case according to an embodiment of the present invention in an open position, with no laptop. The lower gel foam portion 82 in Figure **19** is shown as defining a slit **90** to allow access to storage, as well as to keep wires from coming to the surface where the laptop is used. A base foam support and storage area **92** is also illustrated, which provides a storage area for a laptop power supply, wires, mouse and other cables or desired items. This storage area is preferably only accessible when the lower gel foam portion is removed.

Figure **20** is a bottom perspective view of a laptop computer case according to an embodiment of the present invention in an open position, with a laptop housed therein. The embodiment in Figure **20** shows non-slip comfort pads **94** provided in the contoured surfaces that extend along the entire length of the bottom of the case. This provides for enhanced gripping and reduces slippage during use.

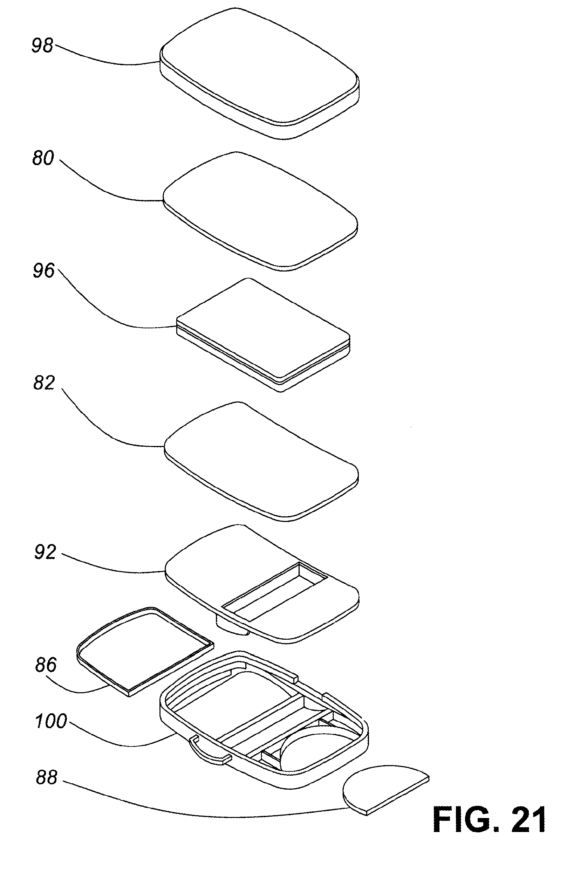

Figure **21** is an exploded view of elements of a laptop computer case according to an embodiment of the present invention. A laptop **96** is shown simply for illustration, and is not part of the case. Figure **21** provides an illustration of the relationship between the lid **98,** lid gel foam **80,** base gel foam **82,** base foam support and storage unit (or area) **92,** pull-out document storage drawer **86,** base **100** and retractable mouse pad 88.

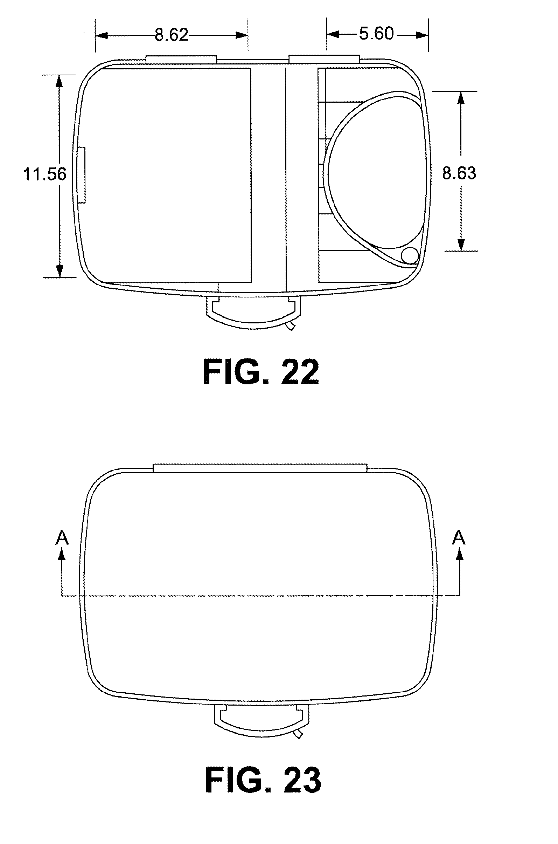

Figure **22** is a top view of a laptop computer case base according to an embodiment of the present invention with portions in section. The base in Figure **22** is shown with the openings to receive the retractable storage drawer, or tray, and the retractable mouse pad. The dimensions shown in Figure **22** are exemplary, and nonlimiting.

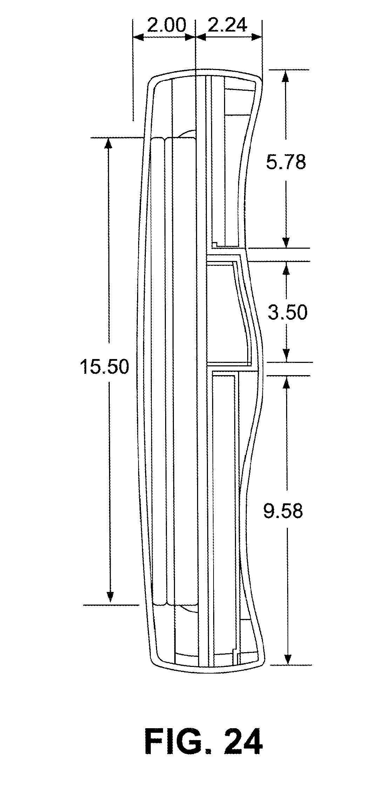

Figure **23** is a top view of a laptop computer case according to an embodiment of the present invention. Figure **24** is a cross-sectional view of the laptop computer case of Figure **23** taken along line A-A. Exemplary dimensions are provided, in inches, in Figure **24** to illustrate the relative dimensions of various elements of the laptop computer case. For example, exemplary dimensions are provided for the height and width of the curved indented portions extending along the entire length of the base. Exemplary dimensions are also provided for the storage area, the base, the lid, and other previously-discussed elements.

In an embodiment, the case has no straps, cables or Velcro™, and provides a good use of space for storage, with a strong emphasis on ergonomic design.

In the above description, for purposes of explanation, numerous details have been set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present invention. For example, specific details are not provided as to whether the embodiments of the invention described herein are implemented as a software routine, hardware circuit, firmware, or a combination thereof.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A mobile workstation comprising:
a base defining two contoured indented surfaces extending along the entire length of the base arranged to engage ergonomically with legs of a user;
an outer frame comprising side walls, a top wall and a bottom wall;
a lid hinged to the base, the lid comprising a plurality of substantially rigid sections and a plurality of non-rigid sections separating the plurality of substantially rigid sections, the plurality of rigid sections arranged to be compactly folded upon one another to permit use of the laptop computer while in the case; and
a retractable working surface tray engaging with and extending from a first side of the base,
the base, the outer frame, and the lid defining a laptop compartment.

2. The mobile workstation of claim 1 further comprising a power supply compartment, provided adjacent the laptop compartment, arranged to provide separate storage of a power supply from the laptop, and defining a power supply passage arranged to permit a computer end of a power cord to be connected to the laptop to permit use while in the laptop compartment.

3. The mobile workstation of claim 2 wherein the power supply compartment further defines a second power supply passage arranged to permit access to the power supply without opening the laptop compartment.

4. The mobile workstation of claim 1 further comprising a pair of exterior protective feet provided at a bottom end of the mobile workstation.

5. The mobile workstation of claim 1 further comprising a shoulder strap, wherein the mobile workstation comprises a shoulder strap retainer to receive the shoulder strap when in a non-operational position.

6. The mobile workstation of claim 4 further comprising a shoulder strap, wherein the mobile workstation comprises a shoulder strap retainer provided between the pair of protective feet, to receive the shoulder strap when in a non-operational position.

7. The mobile workstation of claim 1 further comprising a removable file sleeve arranged to be removably mated with the lid to provide additional storage.

8. The mobile workstation of claim 1 further comprising a retractable handle disposed at a top of the mobile workstation and integrating with the base when in an unretracted position.

9. The mobile workstation of claim 1 wherein the plurality of non-rigid sections are arranged to provide hinging movement when one or more of the plurality of rigid sections are compactly folded upon one another.

10. The mobile workstation of claim 1 further comprising a second retractable tray engaging with and extending from a second side of the base opposite the first side.

11. The mobile workstation of claim 10 further comprising a base foam support and storage unit provided in the base, a storage portion of the storage unit being housed between the first and second retractable trays when the trays are in a closed position.

12. The mobile workstation of claim 1 further comprising a finned foam liner arranged to dissipate heat and secure a laptop in a closed position in the laptop compartment.

13. The mobile workstation of claim 1 further comprising a lid gel foam and a base gel foam provided within the lid and the base, respectively, for securing a laptop computer within the laptop compartment.

14. The mobile workstation of claim 1 wherein the plurality of rigid sections are arranged expose an inner surface of the lid when the plurality of rigid sections are compactly folded upon one another.

15. The mobile workstation of claim 1 wherein the plurality of rigid sections are arranged expose an outer surface of the lid when the plurality of rigid sections are compactly folded upon one another.
